Europäisches Patentamt

**European Patent Office**

Office européen des brevets

(19)

(11) Publication number: **0 241 002**
A2

# (12) EUROPEAN PATENT APPLICATION

(21) Application number: 87105154.6

(51) Int. Cl.⁴: **B29C 51/44** , B29C 69/00

(22) Date of filing: 07.04.87

(30) Priority: 07.04.86 JP 78257/86
16.04.86 JP 91119/86

(43) Date of publication of application:
14.10.87 Bulletin 87/42

(84) Designated Contracting States:
**DE FR SE**

(71) Applicant: **SUMITOMO BAKELITE COMPANY LIMITED**
**2-2, Uchisaiwaicho 1-chome Chiyoda-ku Tokyo 100(JP)**

(72) Inventor: **Kaneko, Fumihiko**
**Sumitomo Bakelite Co.,Ltd.**
**2-2,Uchisaiwai-cho 1-ch**
**Chiyoda-ku Tokyo(JP)**
Inventor: **Yoshimura, Kanji**
**1062, Hirano Kashiba-cho**
**Kitakatsuragi-gun Nara(JP)**

(74) Representative: **Glawe, Delfs, Moll & Partner**
**Patentanwälte**
**Postfach 26 01 62 Liebherrstrasse 20**
**D-8000 München 26(DE)**

(54) Process for manufacturing easy-to-open containers.

(57) A process for manufacturing easy-to-open containers having a plastic cup body with a flange and a lid is proposed. The outer peripheral edge of the flange can be peeled off the cup body together with the lid to open the container. For this purpose, cut-through portions and partially cut portions are formed alternately in the flange. A web of plastic sheet is firstly formed into cup bodies by means of male and female molds. The die-cutting of the cup bodies from the web and the formation of the cut-through portions and the partially cut portions may be carried out either at the same time or one after the other.

FIG.4

# PROCESS FOR MANUFACTURING EASY-TO-OPEN CONTAINERS

The present invention relates to a process for manufacturing easy-to-open containers comprising a plastic cup body formed with a flange, and a lid member, particularly a container in which the outer peripheral portion of the flange and the lid member can be peeled off the cup body at a time to open the container.

A conventional easy-to-open container of this type comprises a plastic cup body having a flange, and a lid member in the form of a film formed with a tongue portion for opening which protrudes over the flange. The periphery of the lid is heat-sealed to the flange after packing a foodstuff in the cup body. In one prior art container, the lid is adapted to be peeled off the flange by holding and pulling up the tongue protruding from a part of the periphery of the flange. In another prior art container, the tip of the tongue is firstly bent up to cut off a thin portion left uncut at a V-cut formed in the bottom surface of the tongue at its tip, and then the lid is peeled off the flange by pulling the tip of the lid together with the tongue which has been separated from the remaining flange portion.

When the lid is pulled up to open the container, the lid stretches by the pulling force. Also, because of its limpness, the pulling force does not effectively act on the sealed portion between the flange and the lid. Consequently, it is impossible to obtain a stable easiness to open.

In accordance with the present invention, easy-to-open containers can be mass-produced extremely easily. In the flange of each cup body, cut-through portions and partially cut portions are formed alternately. This ensures that an outer peripheral portion of the flange can be easily peeled off the cup body together with the lid of the container. The die-cutting of the cup bodies from an intermittently fed web and the formation of the cut-through portions and the partially cut portions may be carried out either at a time or one after the other.

Other features and objects of the present invention will become apparent from the following description with reference to the accompanying drawings, in which:

Fig. 1 is a side view of an apparatus for the first embodiment of the present invention;

Fig. 2 is a plan view of the same;

Fig. 3 is a side view of an apparatus for the second embodiment;

Fig. 4 is a plan view of the same;

Fig. 5. is a side view of an apparatus for the third embodiment;

Fig. 6 is a plan view of the same;

Fig. 7 is a side view of an apparatus for the fourth embodiment of the present invention;

Fig. 8 is a plan view of the same;

Figs. 9 through 11 are enlarged vertical sectional front views of die-cutting knives;

Fig. 12 is a side view of a die-cutting knife;

Fig. 13 is a plan view of a cup body;

Fig. 14 is a perspective view of the same; and

Fig. 15 is a vertical sectional side view of the same with the lid half-open;

Fig. 16 is a perspective view of the support used in the fifth embodiment; and

Fig. 17 is a vertical sectional view showing the fifth embodiment.

In the drawings, A designates a cup body comprising a bottom wall 1, a peripheral wall 2 integral with the bottom wall 1, and a flange 3 outwardly protruding from the edge of the peripheral wall 2. The flange 3 is formed with cut-through portions 5 and partially cut portions 4 alternating along the edge of the peripheral wall 2.

Next, a process for manufacturing the cup bodies A will be described with reference to the accompanying drawings.

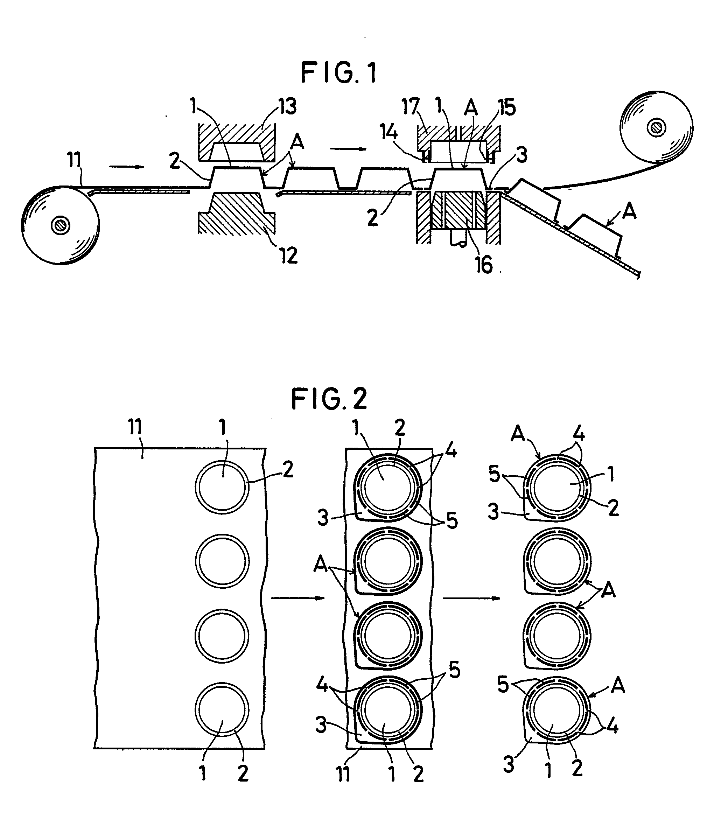

In the first embodiment shown in Figs. 1 and 2, the die-cutting of the cup body from the web and the formation of the cut-through portions and the partially cut portions are carried out at one time. A web 11 of synthetic resin is fed intermittently. While the web 11 is stopping, a male mold 12 and a female mold 13 arranged on both sides of the web 11 press the web 11 to form a cup body A with the peripheral wall 2 and the bottom wall 1 protruding toward one side of the web 11.

When each cup body A comes to a next station, a die-cutting knife 14 is lowered to die-cut the cup body A from the web 11 so that the outwardly protruding flange portion 3 will be formed at the edge of the peripheral wall 2.

Another die-cutting knife 15 is arranged inside the die-cutting knife 14. This knife 15 is lowered simultaneously with the knife 14 to form the cut-through portions 5 alternating with partially cut portions 4 in the flange 3 along the edge of the peripheral wall 2.

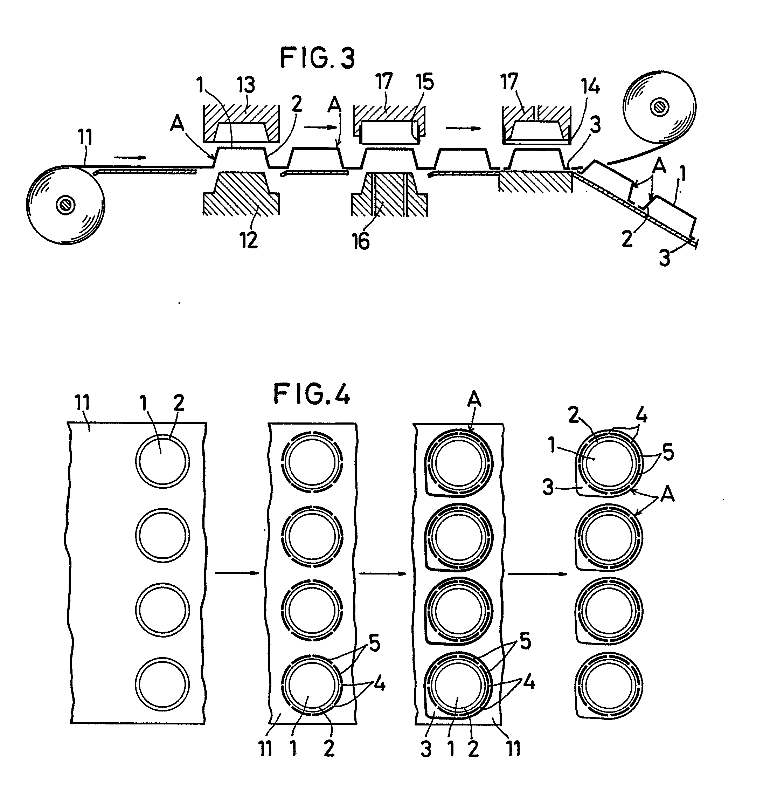

In the second embodiment shown in Figs. 3 and 4, the die-cutting of the cup body from the web and the formation of the cut-through portions and the partially cut portions are carried out separately. When the web 11 intermittently fed is at a stop, the male mold 12 and the female mold 13 opposed to each other press the web 11 to form the cup body A with the peripheral wall 2 and the bottom wall 1 protruding toward one side of the web 11 as in the first embodiment.

When the cup body A comes to a next station, the die-cutting knife 15 is lowered to form the cut-through portions 5 alternating with the partially cut portions 4 in the flange 3 along the edge of the peripheral wall 2. When die-cutting, the cup body A is held in position by a mold 16 inserted therein.

The cup body A formed with the cut-through portions 5 is fed forward and stopped, where the die-cutting knife 14 is lowered to die-cut the cup body A from the web 11 with the flange 3 protruding from the edge of the peripheral wall 2.

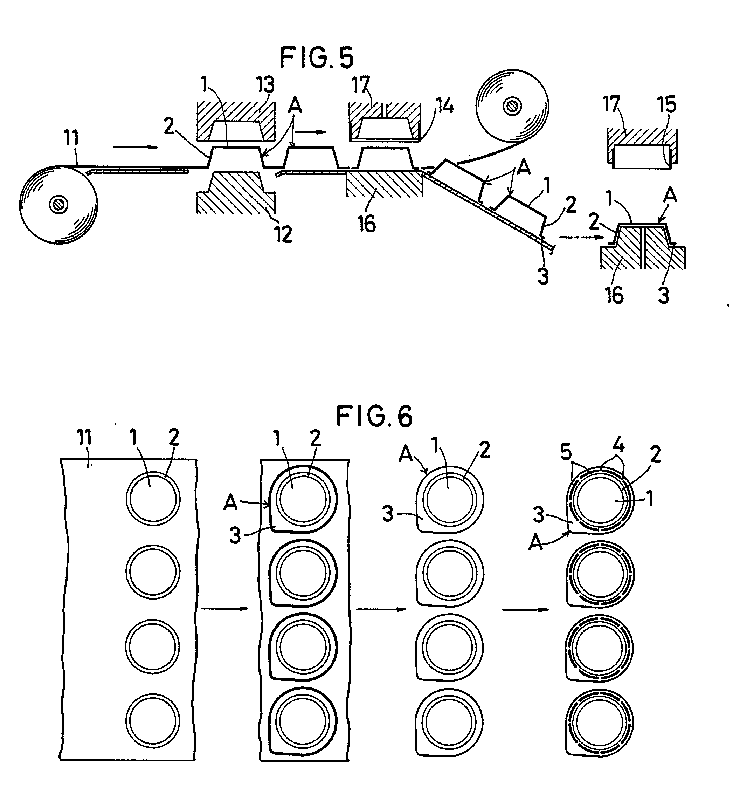

In the third embodiment shown in Figs. 5 and 6, the die-cutting of the cup bodies from the web is carried out, after which the cut-through portions and the partially cut portions are formed off the web line. When the web 11 intermittently fed is at a stop, the male mold 12 and the female mold 13 opposed to each other press the web 11 to form the cup body A as in the first embodiment.

When the cup body A comes to a stop again at the next station, the die-cutting knife 14 is lowered to die-cut the cup body A formed with the flange 3. Thereafter, each die-cut cup body A is put on the mold 16, and the die-cutting knife 15 forms the cut-through portions 5 alternating with the partially cut portions 4 in the flange 3.

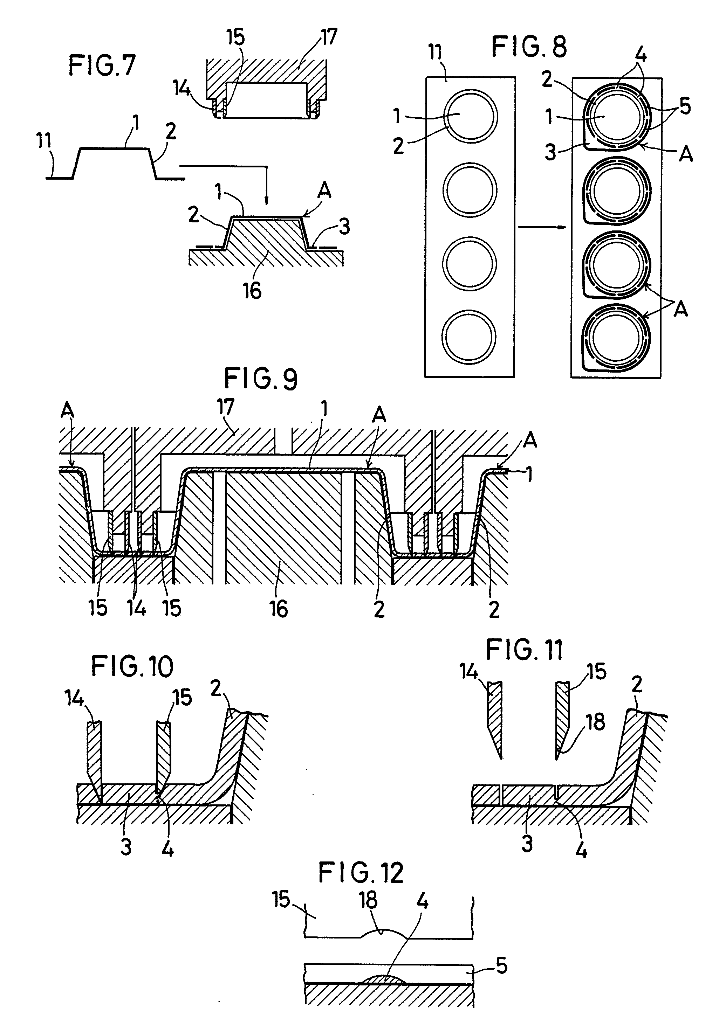

In the fourth embodiment shown in Figs. 7 and 8, the cup body A formed in a strip not in a web in the same manner as above is die-cut by the die-cutting knife 14 with the flange portion 3 and at the same time the die-cutting knife 15 forms the cut-through portions 5 alternating with the partially cut portions 4.

As shown in Figs. 9 to 12, the web 11 is die-cut by the die-cutting knives 14 and 15 when a body 17 lowers by a predetermined distance. In order to form the partially cut portions 4, cutouts 18 are formed at the tip of the die-cutting knives 15.

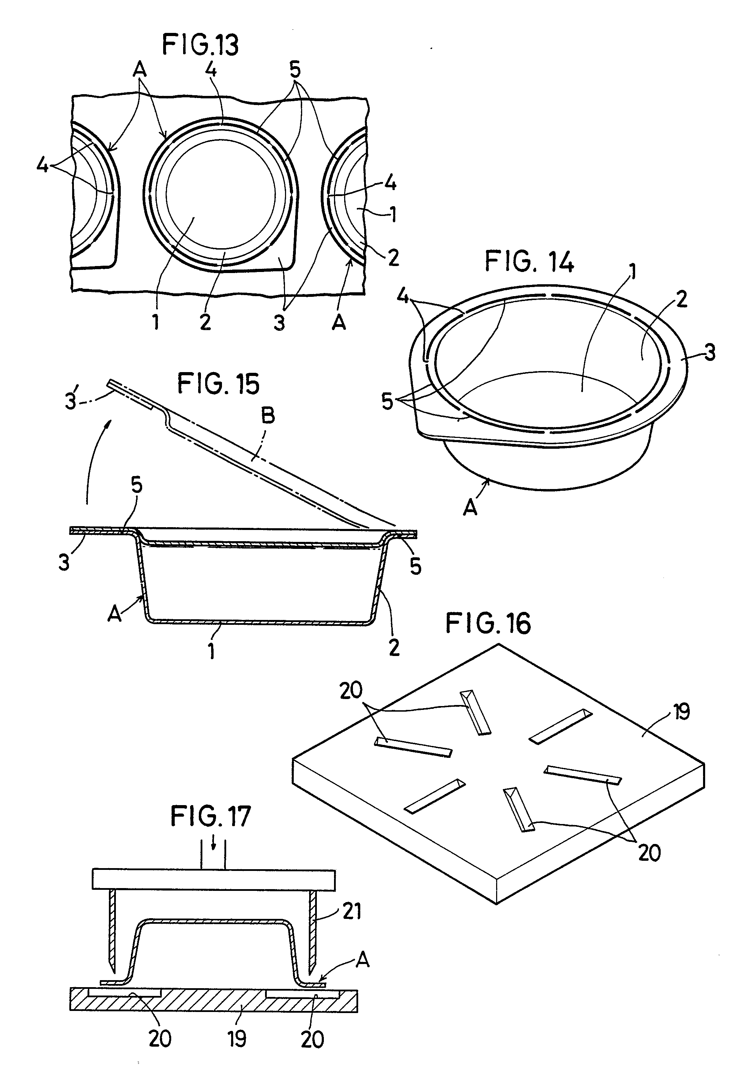

After the cup body A shown in Fig. 14 has been packed with a desired foodstuff, it is covered by a lid B, the periphery of which is heat-sealed to or secured with an adhesive to the flange 3.

When opening, portion 3' outside of the cut-through portions 5 can be separated from the flange 3 by pulling it up. Together with the portion 3', the lid B can be peeled easily.

If the web is heated beforehand, there is no need for heating the male and female molds. If not, they should be heated.

Figs. 16 and 17 show the fifth embodiment in which six cut-through portions 5 and six partially cut portions 4 are formed alternately along the edge of a flange portion 3 having a thickness of 0.8 mm. The partially cut portions 4 have a thickness of about 0.05 mm.

The portion outside of the cut-through portions 5 is removed when opening the container. In this embodiment, as shown in Fig. 16, a support 19 formed with six recesses 20, 0.05 mm in depth and 3 mm in width was used to form partially cut portions 5 instead of using the die-cutting knife 15 formed with a cutout 18. For cutting, a horizontal Thomson knife 21 was used as shown in Fig. 17. The cut-through portions 5 as well as the partially cut portions 4 were very precisely formed, and the portion outside of the cut-through portions 5 was readily removed. It was also possible to die-cut a plurality of cup bodies A at a time without any trouble.

## Claims

1. A process for manufacturing easy-to-open containers, comprising the steps of feeding a web of synthetic resin intermittently, pressing the web by means of a male mold and a female mold arranged on both sides of the web to form a plurality of cup bodies, die-cutting the cup bodies from the web so that an outwardly protruding flange will be formed, and forming cut-through portions and partially cut portions alternately in the flange of said each cup body, said last two steps being carried out at the same time.

2. A process for manufacturing easy-to-open containers, comprising the steps of feeding a web of synthetic resin intermittently, pressing the web by means of a male mold and a female mold arranged on both sides of the web to form a plurality of cup bodies, forming cut-through portions and partially cut portions alternately in the flange of said each cup body, and die-cutting said cup bodies from the web so that an outwardly protruding flange will be formed.

3. A process for manufacturing easy-to-open containers, comprising the steps of feeding a web of synthetic resin intermittently, pressing the web by means of a male mold and a female mold arranged on both sides of the web to form a plurality of cup bodies, die-cutting said cup bodies from the web so that an outwardly protruding flange will be formed, and forming cut-through portions and partially cut portions alternately in the flange of said each cup body, said last step being carried out off the web line.

4. A process for manufacturing easy-to-open containers, comprising the steps of feeding a plurality of strips of synthetic resin intermittently, pressing each strip by means of a male mold and a female mold arranged on both sides of the strip to form a plurality of cup bodies, die-cutting said cup bodies from the strip so that an outwardly protruding flange will be formed, and forming cut-through portions and partially cut portions alternately in the flange of said each cup body, said last two steps being carried out simultaneously.

5. A container as manufactured by the process according to any of claims 1 to 4.

# FIG. 1

# FIG. 2

# FIG. 3

# FIG.4

# FIG.5

# FIG.6

FIG.7

FIG. 8

FIG.9

FIG.10

FIG. 11

FIG.12

FIG.13

FIG. 14

FIG. 15

FIG.16

FIG.17